Europäisches Patentamt

European Patent Office

Office européen des brevets

(11) Publication number: **0 162 236**
**B1**

(19)

# EUROPEAN PATENT SPECIFICATION

(12)

(45) Date of publication of patent specification: **07.02.90**

(51) Int. Cl.⁵: **H 04 N 17/02**

(21) Application number: **85103716.8**

(22) Date of filing: **28.03.85**

(54) Measurement of sc/h phase using a polar display.

(30) Priority: **23.04.84 US 602858**
**23.04.84 US 602859**

(43) Date of publication of application:
**27.11.85 Bulletin 85/48**

(45) Publication of the grant of the patent:
**07.02.90 Bulletin 90/06**

(84) Designated Contracting States:
**DE FR GB NL**

(56) References cited:
**GB-A- 962 203**
**US-A-3 614 304**

(73) Proprietor: **TEKTRONIX, INC.**
**Tektronix Industrial Park D/S Y3-121 4900 S.W.**
**Griffith Drive P.O. Box 500**
**Beaverton Oregon 97077 (US)**

(72) Inventor: **Matney, Earl G.**
**2001 Oak Drive**
**Newberg Oregon 97132 (US)**
Inventor: **Penney, Bruce J.**
**12900 N.W. Dogwood**
**Portland Oregon 97229 (US)**

(74) Representative: **Strasse, Joachim, Dipl.-Ing.**
**et al**
**Strasse und Stoffregen European Patent**
**Attorneys Zweibrückenstrasse 17**
**D-8000 München 2 (DE)**

Courier Press, Leamington Spa, England.

## Description

This invention relates to the measurement of SC/H phase using a polar display.

Background of the invention

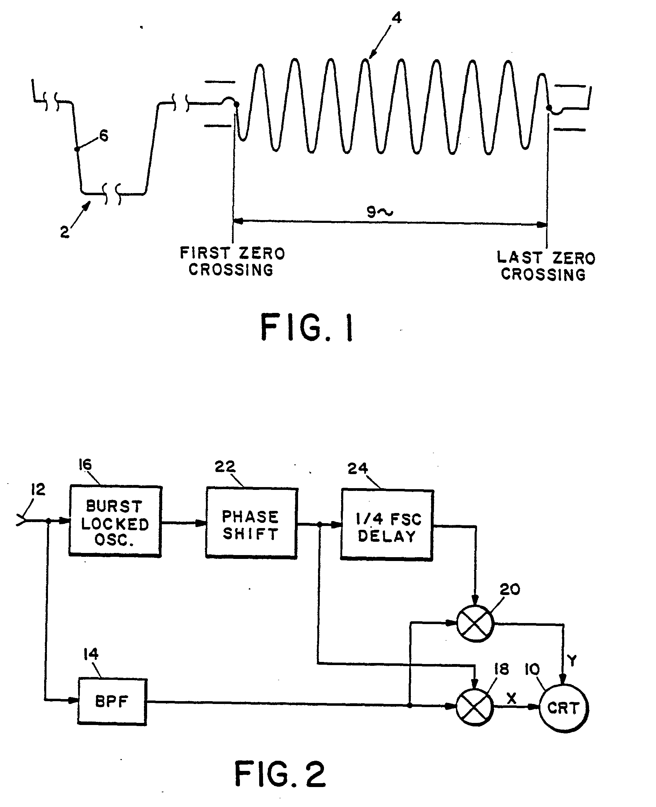

It is well known that the composite color video signals that are conventionally broadcast, for example in the NTSC format, contain not only picture information (luminance and chrominance components but also timing information (vertical sync pulses and horizontal sync pulses) and other reference information (e.g. equalizing pulses and color burst). As shown in Fig. 1, the horizontal sync pulse 2 and burst 4 both occur in the horizontal blanking interval, i.e., the interval between the active line times of consecutive horizontal scan lines. The horizontal sync pulse is a negative-going pulse having an amplitude of 40 IRE units, the 50 percent point 6 of the leading edge of the sync pulse regarded as the horizontal sync point. Burst follows the horizontal sync pulse in the horizonal blanking interval and comprises a sinusoidal wave. The peak-to-peak amplitude of the burst is 40 IRE units, and immediately before and after the burst the signal is at blanking level (zero IRE). The burst ideally has a sin-square envelope, and builds up from, and decays to, blanking level within one or two cycles of the burst wave. In accordance with EIA (Electronics Industries Association) standard RS 170 A, the start of burst is defined by the zero-crossing (positive or negative slope) that precedes the first half cycle of subcarrier that is 50 percent or greater of the burst amplitude, i.e., 40 IRE. The reference subcarrier burst is used in the television receiver to control a phase-locked oscillator which generates a continuous wave at subcarrier frequency and is used to extract the chrominance information from the composite video signal.

Although the NTSC frame is made up of 525 lines which are scanned in two interlaced fields of 262.5 lines each, the NTSC color signal requires a four field sequence. In accordance with the definitions of the fields contained in standard RS 170 A, the zero crossing of the extrapolated color burst (the continuous wave at subcarrier frequency and in phase with burst) must be coincident with the sync point of the immediately preceding horizontal sync pulse on even number lines, and the pattern of sync and burst information for fields 1 and 3 is identical except for the phase of burst. Thus, in field 1, the positive-going zero crossing of the extrapolated color burst coincides with the sync point on even numbered lines whereas in field 3 it is the negative-going zero crossing that coincides with the sync point on even numbered lines. Standards such as that set forth in RS 170 A are required in order to faciliate matching between video signals from different sources and also to facilitate operation of video signal recording and processing equipment. Accordingly, in order to identify the different fields of the four field color sequence, and to adjust the subcarrier to horizontal sync (SC/H) phase so as to achieve the desired coincidence between the zero crossing point of the extrapolated color burst and the sync point, it is necessary to be able to measure the phase of the subcarrier burst relative to the sync point.

Several attempts have previously been made to measure SC/H phase. For example using the Tektronix 1410 signal generator, it is possible to generate a subcarrier in the middle of an unused line. Since the leading edges of the equalizing pulses are midway between sync pulses, a measurement of subcarrier to horizontal sync phase can be implied by comparing the subcarrier with the equalizing pulse timing. Alternatively the 1410 signal generator can generate a burst phased subcarrier during horizontal blanking which replaces a sync pulse and which can be compared with the remaining sync pulses. However, this equipment is not always available to technicians who need to make SC/H phase measurements. The GVG 3258 SC/H phase meter provides a digital output of the phase difference between subcarrier and horizontal sync, but this again requires availability of dedicated equipment.

The vectorscope, which provides a polar display of the amplitude and phase of signal components at subcarrier frequency, is commonly used by video engineers and technicians, but the conventional vectorscope cannot be used to measure SC/H phase.

As used in this description and the appended claims, the term "vectorscope" means an instrument having an input terminal, a display surface, means for generating a visible dot on the display surface, X and Y deflection means for deflecting the position of the visible dot in mutually perpendicular rectilinear directions, a subcarrier regenerator connected to the input terminal for generating a continuous wave signal at subcarrier frequency from, and phase-locked to, the subcarrier burst of a video signal, first and second demodulators having their outputs connected to the X and Y deflection means respectively and each having first and second inputs, means connecting the output of the subcarrier regenerator to the first inputs of the first and second demodulators with a quarter-period relative phase difference, and a filter which passes the subcarrier burst of the video signal and has an output terminal for connection to the second inputs of the first and second demodulators. The vectorscope provides a polar display of the amplitude and phase of signal components at subcarrier frequency. (See e.g. US—A—3 614 304 and GB—A—962 203).

Summary of the invention

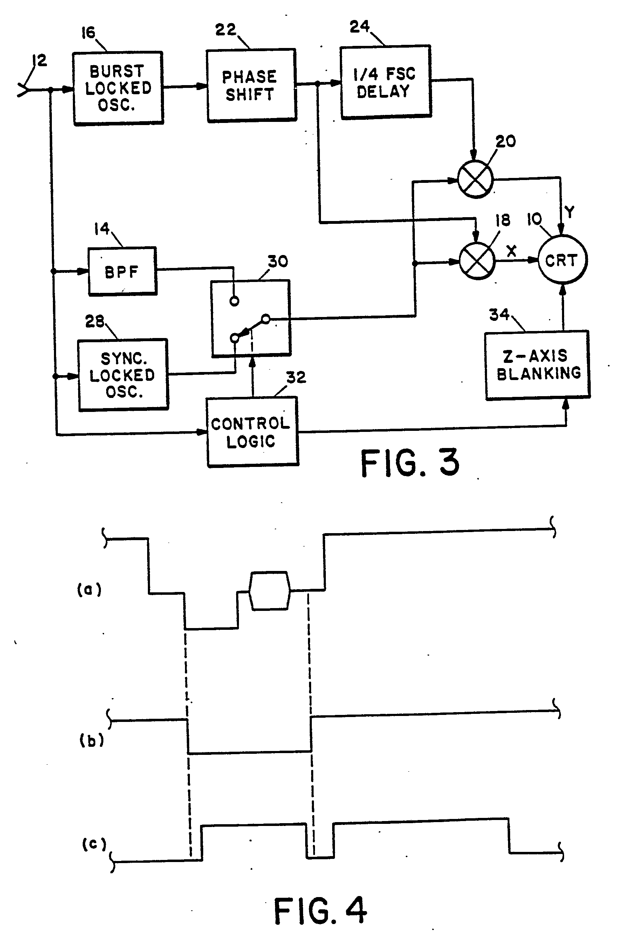

According to a first aspect of the present invention there is provided an instrument of the type in which a composite video signal, including a sync pulse and a burst pulse, is inputted to a subcarrier regenerator (16, 22, 24) to provide quadrature components of a subcarrier frequency locked to the burst pulse and to a chrominance bandpass filter (14) to provide a chrominance signal, the chrominance signal and the quadrature components being applied to the one and the other inputs of a pair of demodulators (18, 20) respectively, the output of the one demodulator (18) being applicable to the x-deflection plates and the output of the other demodulator (29) being applicable to the y-deflection plates of a CRT, characterized by, switching means (30) which are provided between said bandpass filter (14) and the one inputs of said two demodulators (18, 20) and which switch said inputs alternatively to said filter (14) or to an oscillator (28) for generating a subcarrier frequency locked to the phase of the horizontal sync-pulse of said composite video signal, and by a control logic (32 in Fig. 3) which controls said switch causing it to select the output of said filter (14) only during sync and burst time, and to select the output of said oscillator (28) during the remainder of the line time of said composite video signal.

The present invention may be used to enable a vectorscope to provide an indication of SC/H phase. In the conventional vectorscope, the reference subcarrier burst is indicated by a vector on the 180 degree radius (−x direction in Cartesian coordinates). In accordance with the present invention, the time difference between the sync point and the closest zero crossing of the extended subcarrier wave is determined and the time difference is converted to an angular measure within the subcarrier wave cycle. The vectorscope can then be used to display an indication in accordance with the angle corresponding to the time difference, preferably in the form of a dot. In the event that the datum radius from which the angle is measured is the 180 degree radius, the dot is aligned with the subcarrier vector when the subcarrier is in phase with horizontal sync. Thus, the present invention enables a vectorscope to be used to provide an indication of SC/H phase.

Other embodiments of the present invention are protected in independent claims 2 and 4—6.

Brief description of the drawings

For a better understanding of the invention, and to show how the same may be carried into effect, reference will now be made, by way of example, to the accompanying drawings, in which:

Fig. 1 illustrates diagrammatically the waveform of the NTSC video signal during the horizontal blanking interval,

Fig. 2 illustrates in block form the major components of a conventional vectorscope for use in the NTSC system,

Fig. 3 illustrates in block form a vectorscope embodying the present invention, adapted for use in the NTSC system,

Fig. 4 illustrates waveforms useful in understanding operation of the Fig. 3 vectorscope,

Fig. 5 illustrates the display provided by the Fig. 3 vectorscope,

Fig. 6 illustrates in block form a second vectorscope embodying the present invention,

Fig. 7 illustrates the display provided by the Fig. 6 vectorscope,

Fig. 8 illustrates a waveform useful in understanding operation of a vectorscope embodying the invention, adapted for use in the PAL system,

Fig. 9 illustrates the display provided by the Fig. 3 vectorscope, adapted for use in the PAL system, and

Figs. 10, 11 and 12 illustrate in block form additional embodiments of the invention.

Detailed description

Fig. 2 of the drawings illustrates in block form the major components of a conventional vectorscope having a CRT 10. The composite video input signal is applied by way of an input terminal 12 to both a 3.8 MHz bandpass filter 14 and a burst locked oscillator 16. The burst locked oscillator 16 generates a continuous wave signal at subcarrier frequency (3.58 MHz) phase locked to burst. The bandpass filter 14 passes components of the composite video signal that have a frequency of 3.58 MHz, i.e., burst and the color components present during the active line time of the video signal. The output signal from the filter 14 is applied to two demodulators 18 and 20, which may simply be multipliers. The output of the oscillator 16 is applied through a variable phase shifter 22 directly to the demodulator 18 and to the demodulator 20 through a quarter period (of subcarrier frequency) delay 24. The output of the demodulator 18 is applied to the X-deflection plates of the CRT 10. The output of the demodulator 20 is applied to the Y-deflection plates of the CRT. It will thus be understood that the vectorscope provides a display in polar coordinates of the amplitude and phase relative to burst of each of the color components present in the composite video signal. By using the phase shifter 22 to rotate the entire display and align the vector representing burst with a predetermined axis of the display, usually the −X axis, a technician can determined whether the subcarrier components present in a test signal comply with prescribed standards defined by fixed graticule markings. However, the conventional vectorscope display yields no information concerning SC/H phase.

In the case of the vectorscope shown in Fig. 3, the composite video signal is also used to generate a signal representative of SC/H phase.

As shown in Fig. 3, the composite video signal is applied to a phase locked oscillator 28 which generates a continuous wave 3.58 MHz signal. On even numbered lines, a positive-going zero crossing of the continuous wave signal coincides in time with the sync point and on odd numbered lines a negative-going zero crossing of the continuous wave coincides with the sync point. This phase reversal of the continuous wave, which may be accomplished by switching in a half-period delay on alternate lines, compensates for the 180 degree change in the phase relationship between sync and burst on consecutive lines in the NTSC system, and consequently the phase relationship between burst and the continuous wave signal does not change from line to line.

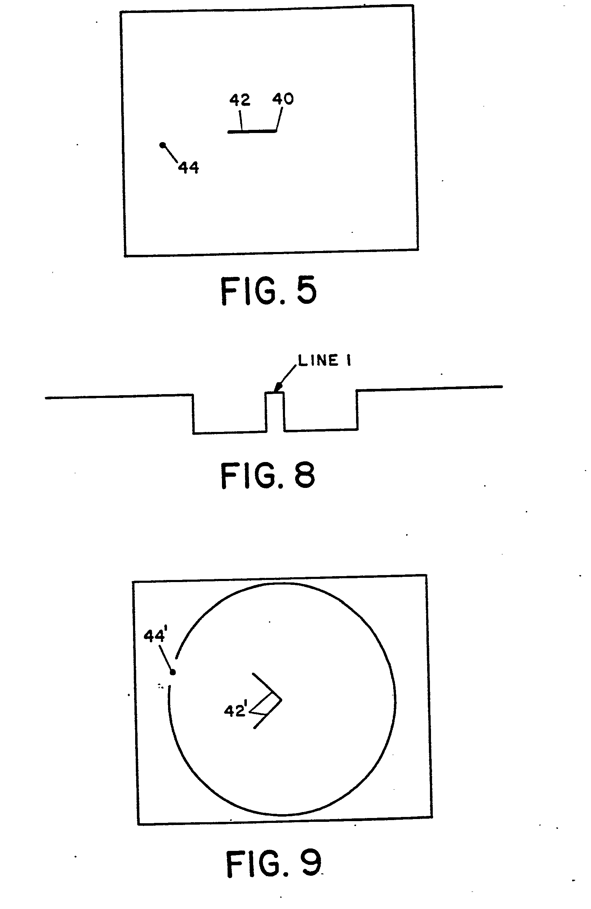

The sync locked CW signal and the output of the chroma filter 14 are applied to a switch 30, which is controlled by a control logic circuit 32. The control logic 32 controls not only selection between the filter 14 and the oscillator 28 but also Z-axis blanking of the CRT 10 by a blanking circuit 34. The manner of operation of the control logic 32 when the vectorscope is in SC/H phase display mode is indicated in Fig. 4, in which the waveform (a) represents the composite video signal, the waveform (b) represents the state of the switch 30 and the waveform (c) represents the state of the blanking circuit 34. When the vectorscope is in its normal display mode, the control logic 32 causes the switch 30 to select continuously the filter 14, and the vectorscope functions in the manner described with reference to Fig. 2. When the vectorscope is operating in its SC/H phase display mode, the control logic 32 causes the switch to select the output of the filter 14 (waveform (b) low) only during sync and burst time, and to select the sync locked CW (waveform (b) high) during the remainder of the line time. The control logic 32 also controls the Z-axis blanking circuit 34 to blank the CRT 10 (waveform (c) low) during the switches between the filter 14 and the oscillator 28 and to unblank the CRT (waveform (c) high) for a portion of the time for which the filter 14 is selected, so as to provide the center dot 40 and burst vector 42 on the display, as shown in Fig. 5. The CRT is also unblanked for a portion of the active line time, during which the sync locked CW is selected, to display a vector representing the phase and amplitude of the sync locked CW on those lines. The duration of the latter unblanking is variable to control the intensity of the display of the sync locked CW vector relative to the burst vector and center dot. Preferably, the unblanking time is chosen so that only the outer extremity of the sync locked CW vector is visible, and therefore the sync locked CW vector is indicated by a dot 44. The amplitude of the sync locked CW is greater than that of burst, and therefore the sync locked CW vector extends beyond the burst vector and the dot 44 indicating sync locked CW is visually distinguishable from the burst vector even when it is disposed at the same angular position of the polar display. If the sync locked CW is in phase with burst, the dot 44 is at the same angular position of the polar display as the burst vector 42.

If the phase of the CW signal provided by the oscillator were not reversed on consecutive lines, the change in phase relationship between sync and burst on consecutive lines would result in display of two sync locked CW vectors (or dots) for odd numbered lines and even numbered lines respectively, and it might be difficult to determine which vector (or dot) represents the sync locked CW for even numbered lines. An alternative way of avoiding this problem would be to program the control logic 32 so that the CRT remains blanked during the entire active line time for odd numbered lines.

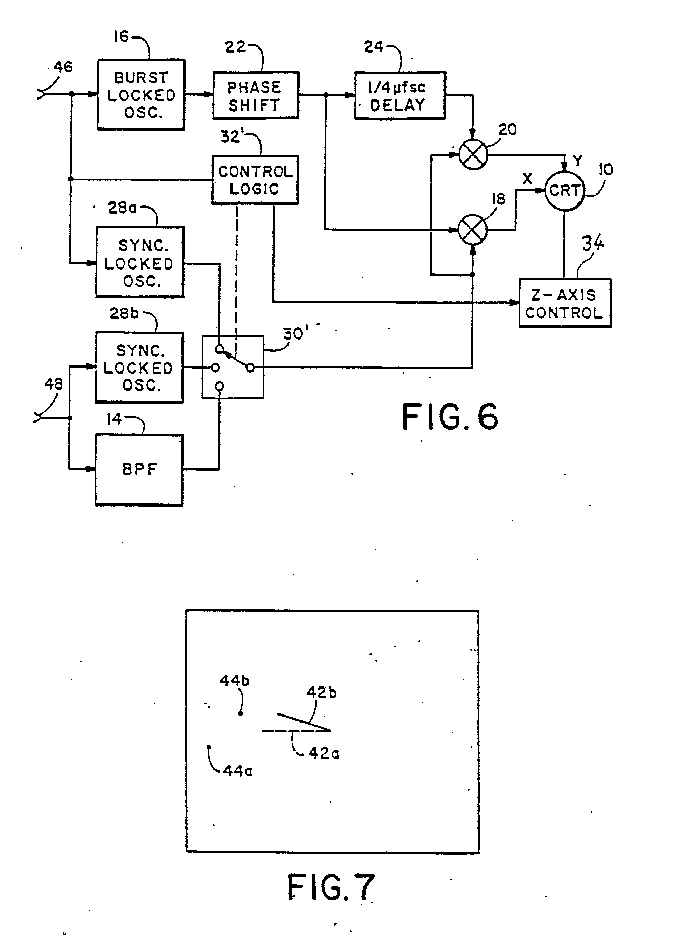

In the production of a television transmission using several video signal sources, it is necessary in order to avoid unacceptable signal degradation upon switching from a first source to a second source to ensure that the correct color frame relationship exists between the signals from the two sources. This can be done by ensuring that the subcarrier burst of each signal is in phase with sync of that signal, and that the bursts of the respective signals are in phase with each other. The vectorscope shown in Fig. 6 can be used to examine simultaneously the SC/H phase of two video signals.

In the case of Fig. 6, the signal being transmitted (the reference signal) is applied through an input terminal 46 to the burst locked oscillator 16 and to a first sync locked oscillator 28a. The signal that is to be selected (the selected signal) is applied through an input terminal 48 to a second sync locked oscillator 28b and to the bandpass filter 14. The outputs of the filter 14 and the oscillators 28 are applied to a switch 30' which selects among these outputs under control of the control logic 32'. The control logic causes the switch to select the output of the filter 14 only during burst and sync time of the selected video signal, the output of the oscillator 28a during line 1 of field 1 of the reference signal and the output of the oscillator 28b at other times. The CRT 10 is blanked during switches between the oscillators 28a and 28b and the filter 14, and is unblanked for a portion of the time for which the filter 14 is selected. Accordingly, the CRT displays a sync dot 44a at an angular position representing SC/H phase of the reference signal and a vector 42b and a sync dot 44b whose relative angular positions represent SC/H phase of the selected video signal. The CW output signals provided by sync locked oscillators 28a and 28b are of different amplitudes, and therefore the two sync dots can be readily distinguished based on radial distance from the center dot.

The CRT does not display a vector representing phase of the reference color burst. On initial setup, the reference signal may be connected to both terminals 46 and 48, in which case a vector indicated 42a and representing the phase of reference burst will be displayed, and by adjusting the phase shifter 22 the vector 42a may be aligned with a predetermined radius, e.g., the 180 degree radius, of the polar display. Thereafter, changes in the phase of reference burst will cause the entire display to rotate, whereas changes in the angular position of only the sync dot 44a represent changes in reference SC/H phase.

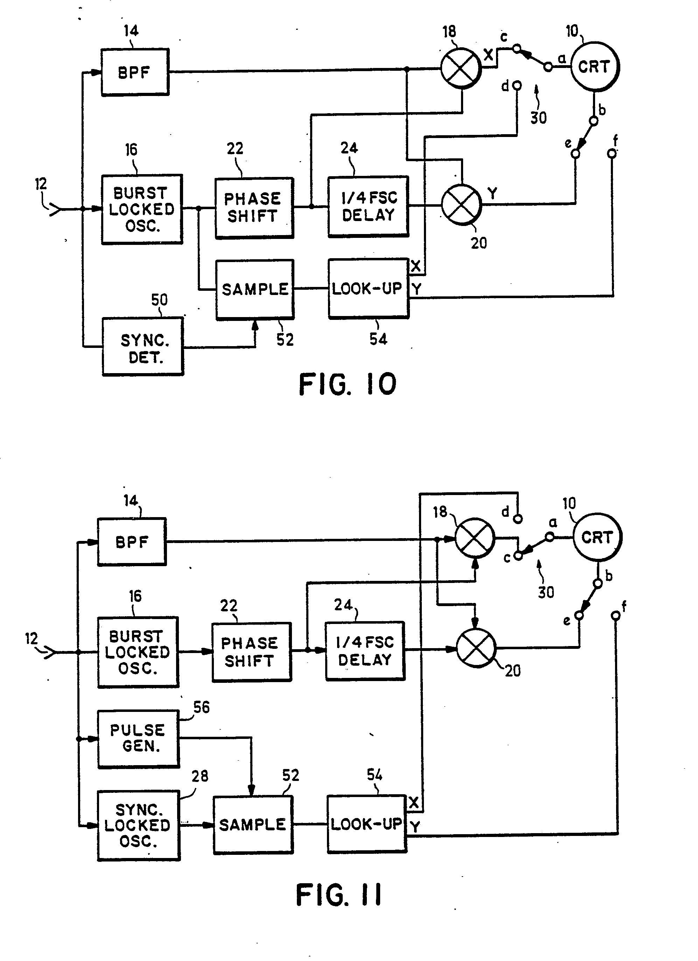

A vectorscope embodying the invention and adapted for use in the PAL system comprises essentially the same functional elements as are shown in Fig. 3 or 6. However, in order to accommodate the 25 Hz offset that exists between burst and sync in the PAL system, the controls performed by the control logic 32 or 32' are somewhat different. Thus, if the control logic 32 of the Fig. 3 vectorscope carried out only the controls indicated by the waveforms shown in Fig. 4, the sync dot would described a complete circle, because SC/H phase is different for every line of each field. In accordance with the PAL standard, SC/H phase is defined on line 1 of field 1. In the PAL version of the Fig. 3 vectorscope, the control logic 32 is used to blank the sync dot for a few lines before and after line 1, as indicated in Fig. 8. The resulting display is shown in Fig. 9, and it will be seen that the part circle formed by the unblanked sync dot on either side of the blanked portions aid in locating the dot 44' representing the sync locked CW vector for line 1. The resulting gaps in the circle form a coarse display of SC/H phase which is usable from a distance. For reasons that are well understood by persons skilled in the art, two burst vectors 42' are shown in Fig. 9. Similarly, in the case of the PAL version of the Fig. 6 vectorscope, the control logic 32' blanks the sync dot for a few lines before and after line 1 of the reference signal.

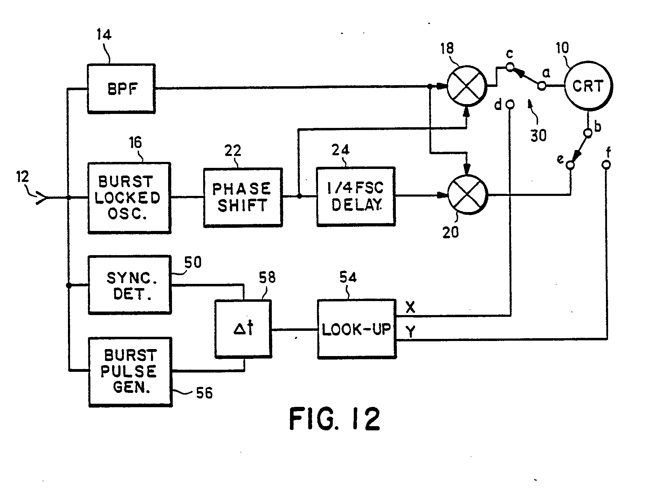

It will be appreciated that the invention is not restricted to the particular instruments that have been described with reference to Figs. 3 and 6, since variations may be made therein without departing from the scope of the invention as defined in the appended claims, and equivalents thereof. For example whereas in the case of Fig. 3 the measure of sync timing relative to burst is obtained by generating the sync locked CW, and this CW signal is used directly as an input to the vectorscope and is processed through the vectorscope's conventional functional elements to provide the desired display, other means of generating a signal representative of the phase angle corresponding to the time difference between the sync point and the closest zero crossing of the extended subcarrier wave may be used. For example, as shown in Fig. 10 it would be possile to use a sync detector 50 to generate a signal at the sync point and to use this signal to control a sampler 52 for sampling the extended subcarrier wave. The amplitude of the extended subcarrier wave at the sample point is dependent upon SC/H phase, and may be used to address a look-up device 54 that generates signals for application to the X and Y plates of the CRT. Alternatively, a burst pulse generator 56 may be used to generate a sampling pulse at the first positive-going zero crossing point of burst, and this pulse may be used to control a sampler 52 for sampling a sync locked continuous wave provided by an oscillator 28 (Fig. 11). Again, the amplitude of the wave at the sample point is representative of the SC/H phase and may be used to address a look-up device 54 that generates X and Y signals for the CRT. Still further, a sync detector 50 could be used to generate a first pulse and the next positive-going zero crossing point of the burst could be used by a burst pulse generator 56 to generate a second pulse, and a simple time measuring circuit 58 could be used to determine the delay between the pulses (Fig. 12). This time difference could be translated through a look-up device 54 into a measure of SC/H phase. In addition, if it were desired to compare two video signals, e.g., an input signal and a reference signal for color framing purposes, the vectorscope could be constructed with two sync locked oscillators fed by the two signals respectively. In this case, the outputs of the two oscillators would be applied to the switch 30, which would time multiplex these outputs and the output of the filter into the display to enable comparison of the timing of the sync points of the two video signals to each other and to burst. Moreover, whereas in the case of Fig. 6 the vectorscope displays the subcarrier frequency components of only the selected video signal, if the vectorscope were used in a production facility that had only a small number of signal sources correct color framing of two video signals (the reference signal and the selected signal) may be achieved by comparing the two video signals directly. In this case, a second bandpass filter would be associated with the input terminal 46 and the switch 30' would select among four possible signals (two bursts and two sync locked CW signals). It would then be possible to provide a technician with information that would permit the selected video signal to be brought into the correct color frame relationship with the reference signal.

## Claims

1. An instrument of the type in which a composite video signal, including a sync pulse and a burst pulse, is inputted to a subcarrier regenerator (16, 22, 24) to provide quadrature components of a subcarrier frequency locked to the burst pulse and to a chrominance bandpass filter (14) to provide a chrominance signal, the chrominance signal and the quadrature components being applied to the one and the other inputs of a pair of demodulators (18, 20) respectively, the output of the one demodulator (18) being applicable to the x-deflection plates and the output of the other demodulator (29) being applicable to the y-deflection plates of a CRT, characterized by, switching means (30) which are provided between said bandpass filter (14) and the one inputs of said two demodulators (18, 20) and which switch said inputs alternatively to said filter (14) or to an oscillator (28) for generating a subcarrier frequency locked to the phase of the horizontal sync-pulse of said composite video signal, and by a control logic (32 in Fig. 3) which controls said switch causing it to select the output of said filter (14) only during sync and burst time, and to select the output of said oscillator (28) during the remainder of the line time of said composite video signal.

2. An instrument of the type in which a composite video signal, including a sync pulse and a burst pulse is inputted to a subcarrier regenerator (16, 22, 24) to provide quadrature components of a subcarrier frequency locked to the burst pulse, further comprising a chrominance bandpass filter (14) to provide a chrominance signal, the chrominance signal and the quadrature components being applied to the one and the other inputs of a pair of demodulators (18, 20) respectively, the output of the one demodulator (18) being applicable to the x-deflection plates and the output of the other demodulator (20) being applicable to the y-deflection plates of a CRT, characterized by switching means (30' in Fig. 6), which, at their output, are connected to the said one inputs of said two demodulators (18, 20) and which switch its input alternatively to a first oscillator (28a in Fig. 6) for generating a subcarrier frequency locked to the phase of the horizontal sync-pulse of said composite video signal (at 46) or to a second oscillator (28b) for generating a subcarrier frequency from a second composite video signal (at 48), said subcarrier frequency being locked to the phase of the horizontal sync-pulse of said second signal, or to a chrominance bandpass filter (14) the input of which being supplied by said second composite video signal respectively, and by a control logic (32') which controls said switch causing it to select the output of said filter (14) only during burst and sync time of said second signal, the output of said first oscillator (28a) during line 1 of field 1 of said first signal, and the output of said second oscillator (28b) at other times.

3. An instrument according to Claim 1 or 2, characterized by, a blanking control (34) to blank the CRT (10) during the switching periods of said switching means (30, 30').

4. An instrument of the type in which a composite video signal, including a sync pulse and burst pulse, is inputted to a subcarrier regenerator (16, 22, 24) to provide quadrature components of a subcarrier frequency locked to the burst pulse and to a chrominance bandpass filter (14) to provide a chrominance signal, the chrominance signal and the quadrature components being applied to the one and the other inputs of a pair of demodulators (18, 20) respectively, the output of the one demodulator (18) being applicable to the x-deflection plates and the output of the other demodulator (29) being applicable to the y-deflection plates of a CRT, characterized by, switching means (30 in Fig. 10) having two outputs (a and b), the one output (a) being connected to the x-deflection plates and the second output (b) being connected to the y-deflection plates of said CRT, and four inputs (c—f in Fig. 10—12) of which a first (c) and a second (d) input is alternatively switchable to said one output (a) whereas a third (e) and a fourth (f) input is synchronously switchable to said second output (b), said first (c) and said third (e) input being connected to the outputs of said first and said second demodulators (18 and 20), and said second (d) and said fourth (f) inputs being connected to a first and a second output of a look-up device (54) outputting a signal representative of the angular position, within the subcarrier cycle of a subcarrier frequency phase-locked to burst of said composite video signal, of the sync point of said signal, the input of said look-up device (54) being addressed by a sampler (52 in Fig. 10) which samples said subcarrier frequency generated by an oscillator (16) and phase-locked to said burst with sampling pulses generated by a sync-detector (50 in Fig. 10) at said sync-point of said composite video signal (at 12).

5. An instrument of the type in which a composite video signal, including a sync pulse and a burst pulse, is inputted to a subcarrier regenerator (16, 22, 24) to provide quadrature components of a subcarrier frequency locked to the burst pulse and to a chrominance bandpass filter (14) to provide a chrominance signal, the chrominance signal and the quadrature components being applied to the one and the other inputs of a pair of demodulators (18, 20) respectively, the output of the one demodulator (18) being applicable to the x-deflection plates and the output of the other demodulator (29) being applicable to the y-deflection plates of a CRT, characterized by, switching means (30 in Fig. 11) having two outputs (a and b), the one output (a) being connected to the x-deflection plates and the second output (b) being connected to the y-deflection plates of said CRT, and four inputs (c—f in Fig. 10—12) of which a first (c) and a second (d) input is alternatively switchable to said one output (a) whereas a third (e) and a fourth (f) input is synchronously switchable to said second output (b), said first (c) and said third (e) input being connected to the outputs of said first and said second demodulators (18 and 20) and said second (d) and said fourth (f) inputs being connected to a first and a second output of a look-up device (54) outputting a signal representative of the angular position, within the subcarrier cycle of a subcarrier frequency phase-locked to the horizontal sync pulse of said composite video signal, of the sync point of said signal, the input of said look-up device (54) being addressed by a sampler (52 in Fig. 11) which samples said subcarrier frequency generated by an oscillator (28) and phase-locked to said sync-pulse with sampling pulses generated by a pulse generator (56 in Fig. 11) which produces a sampling pulse at the first positive-going-zero crossing point of the burst of said composite video signal (at 12).

6. An instrument of the type in which a composite video signal, including a sync pulse and a burst pulse, is inputted to a subcarrier regenerator (16, 22, 24) to provide quadrature components of a subcarrier frequency locked to the burst pulse and to a chrominance bandpass filter (14) to provide a chrominance signal, the chrominance signal and the quadrature components being applied to the one and the other inputs of a pair of demodulators (18, 20) respectively, the output of the one demodulator (18) being applicable to the x-deflection plates and the output of the other demodulator (29) being applicable to the y-deflection plates of a CRT, characterized by, switching means (30 in Fig. 12) having two outputs (a and b), the one output (a) being connected to the x-deflection plates and the second output (b) being connected to the y-deflection plates of said CRT, and four inputs (c—f in Fig. 10—12) of which a first (c) and a second (d) input is alternatively switchable to said one output (a) whereas a third (e) and a fourth (f) input is synchronously switchable to said second output (b), said first (c) and said third (e) input being connected to the outputs of said first and said second demodulators (18 and 20), and said second (d) and said fourth (f) inputs being connected to a first and a second output of a look-up device (54) outputting a signal representative of the angular position, within the subcarrier cycle of the subcarrier frequency of said composite video signal, of the sync point of said signal, the input of said look-up device (54 in Fig. 12) being addressed by means (58 in Fig. 12) for determining the time difference between two pulses generated respectively by a sync-detector (50 in Fig. 12) which produces a pulse at a fixed time with respect to said sync-point, and by a burst pulse generator (56 in Fig. 12) which produces a pulse at a fixed time with respect to the first positive-going zero crossing of the burst of said composite video signal (at 12).

**Patentansprüche**

1. Ein Instrument der Art, bei dem ein zusammengesetztes Videosignal, bestehend aus einem Synchronisationsimpuls und einem Burst-Impuls, einem Hilfsträger-Regenerator (16, 22, 24) eingegeben wird, um Quadraturkomponenten einer mit dem Burst-Impuls und einem Chrominanzbandpaßfilter (14) gekoppelten Hilfsträgerfrequenz zur Erzeugung eines Chrominanzsignals verfügbar zu machen; hierbei wird das Chrominanzsignal an den einen Eingang und die Quadraturkomponenten an den anderen Eingang eines Demodulatorenpaares (18, 20) angelegt, wobei der Ausgang des einen Demodulators (18) mit der X-Ablenkvorrichtung und der Ausgang des anderen Demodulators (29) mit der Y-Ablenkvorrichtung einer Kathodenstrahlröhre verbunden werden, dadurch gekennzeichnet, daß eine Schaltvorrichtung (30), die zwischen dem Bandpaßfilter (14) und den einen Eingängen der beiden Demodulatoren (18, 20) vorgesehen ist und die zur Erzeugung einer Hilfsträgerfrequenz, die an die Phase des horizontalen Synchronizationsimpuls des zusammengesetzten Videosignals gekoppelt ist, die Eingänge wechselweise mit dem Filter (14) oder mit dem Oszillator (28) verbindet, und daß eine Steuerschaltung (32 in Fig. 3) vorgesehen ist, welche die Schaltung so steuert, daß diese den Ausgang des Filters (14) nur während des Synchronisations- und Burst-Zeitpunkts wählt, und den Ausgang des Oszillators (28) während der Restzeilenzeit des zusammengesetzten Videosignales wählt.

2. Instrument der Art, bei dem ein zusammengesetztes Videosignal, bestehend aus einem Synchronisationsimpuls und einem Burst-Impuls, einem Hilfsträger-Regenerator (16, 22, 24) eingegeben wird, um Quadraturkomponenten der Hilfsträgerfrequenz, die mit dem Burst-Impuls gekoppelt ist, verfügbar zu machen, wobei das Instrument weiterhin einen Chrominanzbandpaßfilter (14) zur Erzeugung eines Chrominanzsignals aufweist, und das Chrominanzsignal mit dem einen Eingang und die Quadraturkomponenten mit dem anderen Eingang eines Demodulatorpaares (18, 20) verbunden werden, und der Ausgang des einen Demodulators (18) mit der X-Ablenkvorrichtung und der Ausgang des anderen Demodulator (20) mit der Y-Ablenkvorrichtung einer Kathodenstrahlröhre verbunden ist dadurch gekennzeichnet, daß eine Schaltvorrichtung (30' in Fig. 6), die über ihren Ausgang mit den einen Eingängen der beiden Demodulatoren (18, 20) verbunden ist und die zur Erzeugung einer mit der Phase des horizontalen Synchronisationsimpuls des zusammengesetzten Videosignals (bei 46) gekoppelten Hilfsträgerfrequenz ihren Eingang wechselweise mit einem ersten Oszillator (28a in Fig. 6) oder zur Erzeugung einer Hilfsträgerfrequenz aus einem zweiten zusammengesetzten Videosignal (bei 48) mit einem zweiten Oszillator (28b) verbindet, wobei diese Hilfsträgerfrequenz mit der Phase des horizontalen Synchronisationsimpuls des zweiten Signals oder mit einem Chrominanzbandpaßfilter (14) gekoppelt ist, dessen Eingang von dem zweiten zusammengesetzten Videosignal gespeist wird, und daß eine Steuerschaltung (32') vorgesehen ist, die den Schalter so steuert, daß er den Ausgang des Filters (14) nur während des Burst- und Synchronisationszeitpunkts des zweiten Signals wählt, den Ausgang des ersten Oszillators (28a) während der Zeile 1 des Feldes 1 der ersten Signáles, und den Ausgang des zweiten Oszillators (28b) zu anderen Zeiten.

3. Ein Instrument nach Anspruch 1 oder 2, gekennzeichnet durch eine Austaststeuerung (34) zur Austastung der Kathodenstrahlröhre (10) während der Schaltperioden der Schaltvorrichtung (30, 30').

4. Instrument der Art, bei dem ein zusammengesetztes Videosignal, bestehend aus einem Synchronisationsimpuls und einem Burst-Impuls, einem Hilfsträger-Regenerator (16, 22, 24) eingegeben wird, um Quadraturkomponenten einer mit dem Burst-Impuls und mit einem Chrominanzbandpaßfilter (14) gekoppelten Hilfsträgerfrequenz zur Erzeugung eines Chrominanzsignales verfügbar zu machen; hierbei wird das Chrominanzsignal mit dem einen Eingang und die Quadraturkomponenten werden mit dem anderen Eingang eines Demodulatorenpaares (18, 20) verbunden, und der Ausgang des einen Demodulators (18) ist mit der X-Ablenkvorrichtung und der Ausgang des anderen Demodulators (29) ist mit der Y-Ablenkvorrichtung einer Kathodenstrahlröhre verbunden gekennzeichnet durch weiterhin einer Schaltvorrichtung (30 in Fig. 10) mit zwei Ausgängen (a und b), von denen der eine Ausgang (a) mit der X-Ablenkvorrichtung und der zweite Ausgang (b) mit der Y-Ablenkvorrichtung der Kathodenstrahlröhre verbunden ist, und vier Eingänge (c—f in den Figuren 10—12), von denen der ersten (c) und zweite (d) wechselweise mit dem einen Ausgang (a) verbunden sind, während der dritte (e) und vierte (f) synchron mit dem zweiten Ausgang (b) verbunden werden, wobei der erste (c) und dritte (e) Eingang mit den Ausgängen des ersten bzw. zweiten Demodulators (18 und 20) verbunden ist, und der zweite (d) und vierte (f) Eingang mit dem ersten bzw. zweiten Ausgang einer Abtastvorrichtung (54) verbunden sind, welche ein Signal ausgibt, das die Winkelstellung der Synchronisationspunktes des Signals innerhalb der Hilfsträgerperiode einer mit dem Burst des zusammengesetzten Videosignales phasengekoppelten Hilfsträgerfrequenz darstellt; und der Eingang der Abtastvorrichtung (54) durch einen Abtaster (52 in Fig. 10) aufgerufen wird, der die von einem Oszillator (16) erzeugte und mit dem Burst phasengekoppelte Hilfsträgerfrequenz mittels von einem Synchronisationsdetektor (50 in Fig. 10) am Synchronisationspunkt des zusammengesetzten Videosignals (bei 12) erzeugten Abtastimpulsen abtastet.

5. Instrument der Art, bei dem ein zusammengesetztes Videosignal, bestehend aus einem Synchronisationsimpuls und einem Burst-Impuls, einem Hilfsträger-Regenerator (16, 22, 24) eingegeben wird, um Quadraturkomponenten einer mit dem Burst-Impuls und mit einem Chrominanzbandpaßfilter (14) gekoppelten Hilfsträgerfrequenz zur Erzeugung einers Chrominanzsignales verfügbar zu machen; das Chrominanzsignal und die Quadraturkomponenten werden mit jeweils den beiden Eingängen eines Demodulatorenpaares (18, 20) verbunden, und der Ausgang des einen Demodulators (18) ist mit der X-Ablenkvorrichtung und der Ausgang des anderen Demodulators (29) ist mit der Y-Ablenkvorrichtung einer Kathodenstrahlröhre verbunden gekennzeichnet durch weiterhin eine Schaltvorrichtung (30 in Fig. 11) mit zwei Ausgängen (a und b), von denen der eine Ausgang (a) mit der X-Ablenkvorrichtung und der zweite Ausgang mit der Y-Ablenkvorrichtung der Kathodenstrahlröhre verbunden ist, und vier Eingänge (c—f in Fig. 10—12), von denen der erste (c) und zweite (d) wechselweise mit dem einen Ausgang (a) verbunden ist, während der dritte (e) und vierte (f) synchron mit dem zweiten Ausgang (b) verbunden wird, und der erste (c) und dritte (e) Eingang mit den Ausgängen des ersten und zweiten Demodulators (18 und 20) verbunden ist, und der zweite (d) und vierte (f) Eingang mit dem ersten und zweiten Ausgang einer Abtastvorrichtung (54) verbunden ist, welche ein Signal ausgibt, das innerhalb der Hilfsträgerperiode einer mit dem horizontalen Synchronisationsimpuls des zusammengesetzten Videosignals phasengekoppelten Hilfsträgerfrequenz die Winkelstellung des Synchronisationspunktes des Signals darstellt, wobei der Eingang der Vorrichtung (54) durch einen Abtaster (52 in Fig. 11) aufgerufen wird, der die von einem Oszillator (28) erzeugte und mit dem Synchronisationsimpuls phasengekoppelte Hilfsträgerfrequenz mittels von einem Impulsgenerator (56 in Fig. 11) erzeugten Abtastimpulsen abtastet, wobei der Impulsgenerator einen Abtastimpuls am ersten ansteigenden Nulldurchgang des Bursts des zusammengesetzten Videosignals (bei 12) erzeugt.

6. Instrument der Art, bei dem ein zusammengesetztes Videosignal, bestehend aus einem Synchronisationsimpuls und einem Burst-Impuls, einem Hilfsträger-Regenerator (16, 22, 24) eingegeben wird, um Quadraturkomponenten einer mit dem Burst-Impuls und mit einem Chrominanzbandpaßfilter (14) gekoppelten Hilfsträgerfrequenz zur Erzeugung eines Chrominanzsignales verfügbar zu machen; das Chrominanzsignal und die Quadraturkomponenten werden mit jeweils den beiden Eingängen eines Demodulatorenpaares (18, 20) verbunden, und der eine Demodulatorausgang (18) ist mit der X-Ablenkvorrichtung und der andere Demodulatorausgang (29) ist mit der Y-Ablenkvorrichtung einer Kathodenstrahlröhre verbunden gekennzeichnet durch weiterhin eine Schaltvorrichtung (30 in Fig. 12) mit zwei Ausgängen (a und b), von denen der eine (a) mit der X-Ablenkvorrichtung und der zweite (b) mit der Y-Ablenkvorrichtung der Kathodenstrahlröhre verbunden ist, und vier Eingänge (c—f in Fig. 10—12), von denen der erste (c) und zweite (d) wechselweise mit dem einen Ausgang (a) verbunden ist, während der dritte (e) und vierte (f) synchron mit dem zweiten Ausgang (b) verbunden wird, und der erste (c) und dritte (e) Eingang mit den Ausgängen des ersten und zweiten Demodulators (18 und 20) verbunden ist, und der zweite (d) und vierte (f) Eingang mit dem ersten und zweiten Ausgang einer Abtastvorrichtung (54) verbunden sind, welche ein Signal ausgibt, das innerhalb der Hilfsträgerperiode der Hilfsträgerfrequenz des zusammengesetzten Videosignals die Winkelstellung des Synchronisationspunktes des Signals darstellt, wobei der Eingang der Vorrichtung (54) durch einen Abtaster (52 in Fig. 12) von einer Vorrichtung (58 in Fig. 12) aufgerufen wird zur Bestimmung des Zeitunterschiedes zwischen zwei Impulsen, die jeweils von einem Synchronisationsdetektor (50 in Fig. 12), der einen Impuls zu einer bestimmten Zeit bezüglich des Synchronisationspunkts erzeugt, bzw. von einem Burst-Impulsgenerator (56 in Fig. 12), der einen Impuls zu einer bestimmten Zeit bezüglich der ersten ansteigenden Nulldurchgangs des Bursts des zusammengesetzten Videosignals (bei 12) erzeugt, erzeugt werden.

**Revendications**

1. Appareil du type dans lequel un signal vidéo composite comportant une impulsion de synchronisation et une impulsion de salve est appliqué à l'entrée d'un régénérateur de sous-porteuse (16, 22, 24) pour fournir des composantes quadrature d'une fréquence sous-porteuse asservie à l'impulsion de salve, et à un filtre passe-bande (14) pour fournir un signal de chrominance, ce signal de chrominance et les composantes en quadrature étant appliqués à l'une et à l'autre des entrées d'une paire de démodulateurs (18, 20), respectivement, le signal de sortie d'un modulateur (18) pouvant être appliqué aux plaques de déviation de l'axe X, et le signal de sortie de l'autre démodulateur (20) pouvant être appliqué aux plaques de déviation de l'axe Y d'un tube à rayons cathodiques (10), caractérisé en ce qu'il comporte: ·

— des moyens de commutation (30) prévus entre le filtre passe-bande (14) et les premières entrées des deux démodulateurs (18, 20) et qui relient ces entrées alternativement au filtre (14) ou à un oscillateur (28) pour générer une fréquence sous-porteuse asservie à la phase de l'impulsion de synchronisation de ligne du signal vidéo composite; et

— une logique de commande (32 sur la figure 3) qui commande les moyens de commutation (30) pour qu'ils sélectionnent le signal de sortie du filtre (14) uniquement pendant la durée de l'impulsion de synchronisation et de la salve, et qu'ils sélectionnent le signal de sortie de l'oscillateur (28) pendant le reste de la durée d'une ligne du signal vidéo composite.

2. Appareil du type dans lequel un signal vidéo composite comportant une impulsion de synchronisation et une impulsion de salve est appliqué à l'entrée d'un régénérateur de sous-porteuse (16, 22, 24) pour fournir des composantes en quadrature d'une fréquence sous-porteuse asservie à l'impulsion de salve, comportant en outre un filtre passe-bande de chrominance (14) pour fournir un signal de chrominance, ce signal de chrominance et les composantes en quadrature étant appliqués à l'une et à l'autre des entrées d'une paire de démodulateurs (18, 20), respectivement, le signal de sortie du premier démodulateur (18) pouvant être appliqué aux plaques de déviation de l'axe X, et le signal de sortie de l'autre démodulateur (20) pouvant être appliqué aux plaques de déviation de l'axe Y d'un tube à rayons cathodiques (10), caractérisé en ce qu'il comporte:— des moyens de commutation (30' sur la figure 6) qui, à leur sortie, sont reliés aux premières entrées des deux démodulateurs (18, 20), et qui relient leur entrée alternativement à un premier oscillateur (28a sur la figure 6) pour générer une fréquence sous-porteuse asservie à la phase de l'impulsion de synchronisation de ligne du signal vidéo composite (en 46) ou à un deuxième oscillateur (28b) pour générer une fréquence sous-porteuse à partir d'un deuxième signal vidéo composite (en 48), cette fréquence sous-porteuse étant asservie à la phase de l'impulsion de synchronisation de ligne du deuxième signal, ou à la sortie d'un filtre passe-bande de chrominance (14) dont l'entrée reçoit le deuxième signal vidéo composite, respectivement; et

— une logique de commande (32') qui commande les moyens de commutation (30') pour qu'ils sélectionnent le signal de sortie du filtre (14) uniquement pendant la durée de la salve et de l'impulsion de synchronisation du deuxième signal vidéo composite, le signal de sortie du premier oscillateur (28a) pendant la durée de la ligne 1 de la trame 1 du premier signal vidéo composite, et le signal de sortie du deuxième oscillateur (28b) le reste du temps.

3. Appareil selon la revendication 1 ou 2, caratérisé en ce qu'il comporte une commande de suppression (34) pour supprimer le faisceau du tube à rayons cathodiques (10) pendant les périodes de commutation des moyens de commutation (30, 30').

4. Appareil du type dans lequel un signal vidéo composite comportant une impulsion de synchronisation et une impulsion de salve est appliqué à l'entrée d'un régénérateur de sous-porteuse (16, 22, 24) pour fournir des composantes en quadrature d'une fréquence sous-porteuse asservie à l'impulsion de salve, et à un filtre passe-bande de chrominance (14) pour fournir un signal de chrominance, ce signal de chrominance et les composantes en quadrature étant appliqués à l'une et à l'autre des entrées d'une paire de démodulateurs (18, 20), respectivement, le signal de sortie du premier démodulateur (18) pouvant être appliqué aux plaques de déviation de l'axe X, et le signal de sortie de l'autre démodulateur (20) pouvant être appliqué aux plaques de déviation de l'axe Y d'un tube à rayons cathodiques (10), caractérisé en ce qu'il comporte:

— des moyens de commutation (30 sur la figure 10) ayant deux sorties (a et b), une sortie (a) étant reliée aux plaques de déviation de l'axe X, et la deuxième sortie (b) étant reliée aux plaques de déviation de l'axe Y du tube cathodique (10), et quatre entrées (c—f sur les figures 10—12) dont une première entrée (c) et une deuxième entrée (d) peuvent être alternativement reliées à la sortie (a), tandis qu'une troisième entrée (e) et une quatrième entrée (f) peuvent être reliées de façon synchrone à la deuxième sortie (b), la première entrée (c) et la troisième entrée (e) étant respectivement reliées aux sorties des premier et deuxième démodulateurs (18 et 20), et la deuxième entrée (d) et la quatrième entrée (f) étant respectivement reliées à une première et une deuxièmes entrée d'un dispositif à consultation de table (54) fournissant un signal représentatif de la position angulaire, à l'intérieur du cycle de sous-porteuse d'une fréquence sous-porteuse asservie en phase à la salve du signal vidéo composite, du point de synchronisation de ce signal, l'entrée du dispositif à consultation de table (54) étant adressée par un échantillonneur (52 sur la figure 10) qui échantillonne la fréquence sous-porteuse générée par un oscillateur (16) et asservie en phase à la salve couleur avec des impulsions d'échantillonnage générées par un détecteur de synchronisation (50 sur la figure 10) au point de synchronisation du signal vidéo composite (en 12).

5. Appareil du type dans lequel un signal vidéo composite comportant une impulsion de synchronisation et une impulsion de salve est appliqué à l'entrée d'un régénérateur de sous-porteuse (16, 22, 24) pour fournir des composantes en quadrature d'une fréquence sous-porteuse asservie à l'impulsion de salve, et à un filtre passe-bande de chrominance (14) pour fournir un signal de chrominance, ce signal de chrominance et les composantes en quadrature étant appliqués à l'une et à l'autre des entrées d'une paire de démodulateurs (18, 20), respectivement, le signal de sortie du premier démodulateur (18) pouvant être appliqué aux plaques de déviation de l'axe X, et le signal de sortie de l'autre démodulateur (20) pouvant être appliqué aux plaques de déviation de l'axe Y d'un tube à rayons cathodiques (10), caractérisé en ce qu'il comporte:

—des moyens de commutation (30 sur la figure 11) ayant deux sorties (a et b), l'une (a) de ces sorties étant reliée aux plaques de déviation de l'axe X, et la deuxième sortie (b) étant reliée aux plaques de déviation de l'axe Y du tube à rayons cathodiques (10), et quatre entrées (c—f sur les figures 10—12) dont une première entrée (c) et une deuxième entrée (d) peuvent être alternativement reliées à la sortie (a), tandis qu'une troisième entrée (e) et une quatrième entrée (f) peuvent être reliées de façon synchrone à la deuxième sortie (b), la première entrée (c) et la troisième entrée (e) étant reliées aux sorties des premier et deuxième démodulateurs (18 et 20); et les deuxième (d) et quatrième (f) entrées étant respectivement reliées à une première et une deuxième sortie d'un dispositif à consultation de table (54) fournissant un signal représentatif de la position angulaire, à l'intérieur du cycle de sous-porteuse d'une fréquence sous-porteuse asservie en phase à l'impression de synchronisation de ligne du signal vidéo composite, du point de synchronisation de ce signal, l'entrée du dispositif à consultation de table (54) étant adressée par un échantillonneur (52 sur la figure 11) qui échantillonne la fréquence sous-porteuse générée par un oscillateur (28) et asservie en phase à l'impulsion de synchronisation de ligne avec des impulsions d'échantillonnage générées par un générateur d'impulsions (56 sur la figure 11) qui produit une impulsion d'échantillonnage au premier point de passage par zéro, dans le sens positif, de la salve du signal vidéo composite (en 12).

6. Appareil du type dans lequel un signal vidéo composite comportant une impulsion de synchronisation et une impulsion de salve est appliqué à l'entrée d'un régénérateur de sous-porteuse (16, 22, 24) pour fournir des composantes en quadrature d'une fréquence sous-porteuse asservie à l'impulsion de salve, et à un filtre passe-bande de chrominance (14) pour fournir un signal de chrominance, ce signal de chrominance et les composantes en quadrature étant appliqués à l'une et à l'autre des entrées d'une paire de démodulateurs (18, 20), respectivement, le signal de sortie du premier démodulateur (18) pouvant être appliqué aux plaques de déviation de l'axe X, et le signal de sortie de l'autre démodulateur (20) pouvant être appliqué aux plaques de déviation de l'axe Y d'un tube à rayons cathodiques (10), caractérisé en ce qu'il comporte:

—des moyens de commutation (30 sur la figure 12) ayant deux sorties (a et b), l'une (a) de ces sorties étant reliée aux plaques de déviation de l'axe X et la deuxième sortie (b) étant reliée aux plaques de déviation de l'axe Y du tube cathodique (10), et quatre entrées (c—f sur les figures 10—12) dont une première entrée (c) et une deuxième entrée (d) peuvent être alternativement reliées à l'entrée (a), tandis qu'une troisième entrée (e) et une quatrième entrée (f) peuvent être reliées de façon synchrone à la deuxième entrée (b), la première entrée (c) et la troisième entrée (e) étant respectivement reliées aux sortie des premier et deuxième démodulateurs (18 et 20), et la deuxième entrée (d) et la quatrième entrée (f) étant respectivement reliées à une première et une deuxième sortie d'un dispositif à consultation de table (54) fournissant un signal représentatif de la position angulaire, à l'intérieur du cycle de sous-porteuse de la fréquence sous-porteuse du signal vidéo composite, du point de synchronisation de ce signal, l'entrée du dispositif à consultation de table (54) étant adressée par des moyens (58) pour déterminer la différence de temps entre deux impulsions générées respectivement par un détecteur de synchronisation (50) qui produit une impulsion à temps fixe par rapport au point de synchronisation; et

—un générateur d'impulsions de salve (56) qui produit une impulsion à un temps fixe par rapport au premier passage par zéro, dans le sens positif, de la salve du signal vidéo composite (en 12).

FIRST ZERO
CROSSING

LAST ZERO
CROSSING

FIG. 1

FIG. 2

1

FIG. 3

FIG. 4

2

42 40

44

## FIG. 5

LINE I

## FIG. 8

44'

42'

## FIG. 9

FIG. 6

FIG. 7

4

FIG. 10

FIG. II

5

FIG. 12